# EUROPEAN PATENT APPLICATION

(11) **EP 3 726 884 A1**
(43) Date of publication of application: **21.10.2020**
(21) Application number: 18888600.6
(22) Date of filing: 19.11.2018
(51) Int. Cl.: H04W 36/08

(54) **SWITCHING METHOD BETWEEN APS, AP AND AP COLLABORATIVE WORK CONTROLLER**

(30) Priority: 13.12.2017 CN 201711329204
(71) Applicant: ZTE Corporation, Shenzhen, Guangdong 518057 (CN)
(72) Inventor: CHEN, Daowei, Shenzhen, Guangdong 518057 (CN); WANG, Xinyu, Shenzhen, Guangdong 518057 (CN); DONG, Weijie, Shenzhen, Guangdong 518057 (CN)
(74) Representative: Petraz, Gilberto Luigi
(86) International application number: PCT/CN2018/116103
(87) International publication number: WO 2019/114498

(57) **Abstract**

Provided are a switching method between APs, an AP and an AP collaborative work controller. The method comprises steps of: applying, by a first access point (AP), to an AP collaborative work controller for a BSSID, and associating with a station requesting for an association based on the BSSID obtained by application, wherein each BSSID corresponds to one station; receiving, by the first AP, a notification, from the AP collaborative work controller, to switch the station from the first AP to a second AP; and passing, by the first AP, information of the associated station and information of an associated BSSID to the second AP, and switching the station to the second AP. In the present disclosure, the second AP acquires, from the first AP, information of the associated station and information of the associated BSSID. Therefore, an association process and a key negotiation process with the station are omitted, so that roaming switching time is greatly shortened.

## Description

### Field of the Invention

The present disclosure relates to the field of networking of multiple access points (APs), and in particular, to a switching method between APs, an AP and an AP collaborative work controller.

### Background of the Invention

With the development of home networking of multiple APs, there is an increasing demand for fast roaming between multiple APs inside a home. For traditional 802.11k/v/r and a pre-associating roaming manner, it is necessary that a station (STA) supports a specific protocol, and thus they cannot be popularized. In addition, according to the existing protocol, when the STA is switched between APs, it is required to perform association and key negotiation with an AP to be connected to, and thus switching time is relatively long.

### Summary of the Invention

Embodiments of the present disclosure provide a switching method between APs, an AP and an AP collaborative work controller, so as to at least solve a problem that switching time is relatively long when a STA is switched between APs.

According to one aspect of the present disclosure, a switching method between APs is provided. The switching method including steps of: applying, by a first access point (AP), to an AP collaborative work controller for a basic service set identifier (BSSID) and associating with a station requesting for an association based on the BSSID obtained by application, wherein each BSSID corresponds to one station; receiving, by the first AP, a notification, from the AP collaborative work controller, to switch the station from the first AP to a second AP; and passing, by the first AP, information of the associated station and information of an associated BSSID to the second AP and switching the station to the second AP.

In an embodiment, the step of applying, by a first AP, to an AP collaborative work controller for a basic service set identifier (BSSID) and associating with a station based on the BSSID obtained by application includes steps of: applying, by the first AP, to a BSSID resource pool of the AP collaborative work controller for a vacant BSSID and broadcasting a beacon frame based on the BSSID obtained by application; and responding, by the first AP, to an association request of the station and associating with the station.

In an embodiment, after the step of associating, by the first AP, with a station based on the BSSID, the switching method further includes a step of: synchronizing, by the first AP, information of the associated station and information of the associated BSSID to the AP collaborative work controller.

In an embodiment, after the step of associating, by the first AP, with a station based on the BSSID, the switching method further includes a step of: returning, by the first AP, the BSSID obtained by application to the BSSID resource pool of the AP collaborative work controller when the first AP de-associates with the station or no response is made before a timeout.

In an embodiment, before the step of receiving, by the first AP, a notification to switch the station from the first AP to a second AP, the switching method further includes steps of: reporting, by the first AP and the second AP respectively, detected signal quality of the station to the AP collaborative work controller; and determining, by the AP collaborative work controller, whether to switch the station from the first AP to the second AP based on the reported signal quality of the station.

In an embodiment, the step of switching, by the first AP, the station to the second AP includes steps of: requesting, by the first AP, to the second AP to switch the station to the second AP; and terminating, by the first AP, the association to the station based on a switching response of the second AP and transferring control over the associated BSSID to the second AP.

In an embodiment, information of the station includes a MAC address of the station and a negotiated key for associating the station with the first AP; and the information of the BSSID includes a name of the BSSID.

In an embodiment, there are multiple APs which all work on the same channel, and the AP collaborative work controller is a home gateway or one of the multiple APs.

According to another aspect of the present disclosure, an access point (AP) is further provided. The AP comprises: an associating module, which is configured to apply to an AP collaborative work controller for a basic service set identifier (BSSID), and associate with a station requesting for an association based on the BSSID obtained by application, wherein each BSSID corresponds to one station; a receiving module, which is configured to receive a notification, from the AP collaborative work controller, to switch the station from the AP itself to a second AP; and a switching module, which is configured to pass information of an associated station and information of an associated BSSID to the second AP, and switch the station to the second AP.

In an embodiment, the AP further includes: a synchronizing module, which is configured to synchronize the information of the associated station and information of the associated BSSID to the AP collaborative work controller.

In an embodiment, the AP further includes: a reporting module, which is configured to report detected signal quality of the station to the AP collaborative work controller.

In an embodiment, the switching module includes: a requesting unit, which is configured to request to the second AP to switch the station to the second AP; and a switching unit, which is configured to terminate the association to the station based on a switching response of the second AP, and transfer control over the associated BSSID to the second AP.

In an embodiment, information of the station includes a MAC address of the station and a negotiated key for associating the station with the first AP; and information of the BSSID includes a name of the BSSID.

According to further another aspect of the present disclosure, a switching method between access points (APs) is further provided. The method includes steps of: receiving, by an AP collaborative work controller, an application for a basic service set identifier (BSSID) from a first access point (AP); allocating, by the AP collaborative work controller, one BSSID, which is used to associate a station requesting for an association to the first AP, to the first AP based on the application, wherein each BSSID corresponds to one station; and notifying, by the AP collaborative work controller, the first AP to switch the station from the first AP to a second AP.

In an embodiment, after the step of allocating, by the AP collaborative work controller, one BSSID to the first AP based on the application, the method further includes a step of: synchronizing, by the AP collaborative work controller, information of the associated station and information of an associated BSSID with the first AP, and synchronizing the information of the station and the information of the BSSID to the second AP.

In an embodiment, before the step of notifying, by the AP collaborative work controller, the first AP to switch the station from the first AP to a second AP, the method further includes steps of: receiving, by the AP collaborative work controller, detected signal quality of the station reported by the first AP and the second AP; and determining whether to switch the station from the first AP to the second AP based on the reported signal quality of the station.

According to still another aspect of the present disclosure, an AP collaborative work controller is provided. The AP collaborative work controller includes: a receiving module, which is configured to receive an application for a basic service set identifier (BSSID) from a first access point (AP); an allocating module, which is configured to allocate one BSSID to the first AP based on the application, so that the first AP associates with a station requesting for an association based on the BSSID, wherein each BSSID corresponds to one station; and a notifying module, which is configured to notify the first AP to switch the station from the first AP to a second AP.

In an embodiment, the AP collaborative work controller further includes: a synchronizing module, which is configured to synchronize information of the associated station and information of an associated BSSID with the first AP, and synchronize the information of the station and the information of the BSSID to other APs.

In an embodiment, the receiving module is further configured to receive detected signal quality of the station reported by the first AP and the second AP respectively; and the AP collaborative work controller further includes a determining module which is configured to determine whether to switch the station from the first AP to the second AP based on the reported signal quality of the station.

In an embodiment, the AP collaborative work controller is a home gateway or one of multiple APs.

In the above embodiments of the present disclosure, since the second AP acquires information of the associated station and information of the associated BSSID from the first AP, an association process and a key negotiation process with the station are omitted, so that roaming switching time is greatly shortened.

### Brief Description of the Drawings

The accompanying drawings illustrated herein are used to provide further understanding to the present disclosure and constitute part of the present application. Exemplary embodiments and the description of the present disclosure are used for explaining the present disclosure and do not constitute improper limitation to the present disclosure. In the accompanying drawings:
Fig. 1 is a flowchart of switching a STA between APs according to an embodiment of the present disclosure;
Fig. 2 is a schematic diagram of home networking of multiple APs according to an embodiment of the present disclosure;
Fig. 3 is a flowchart of multiple APs collaboratively working according to an embodiment of the present disclosure;
Fig. 4 is a schematic diagram of switching a STA between APs according to an embodiment of the present disclosure;
Fig. 5 is a flowchart of switching a STA between APs according to an embodiment of the present disclosure;
Fig. 6 is a flowchart of switching a STA between APs according to an embodiment of the present disclosure;
Fig. 7 is a block diagram of a structure of an AP according to an alternative embodiment of the present disclosure; and
Fig. 8 is a block diagram of a structure of a collaborative work controller according to an alternative embodiment of the present disclosure.

### Detailed Description of the Embodiments

The present disclosure will be described in detail below with reference to the accompanying drawings in conjunction with embodiments. It should be noted that embodiments of the present application and features in the embodiments may be combined with each other as long as there is no conflict.

It should be noted that terms such as "first" and "second" used in the description, claims and the accompanying drawings of the present disclosure are used for distinguishing similar objects, rather than for describing a specific order or a sequential order.

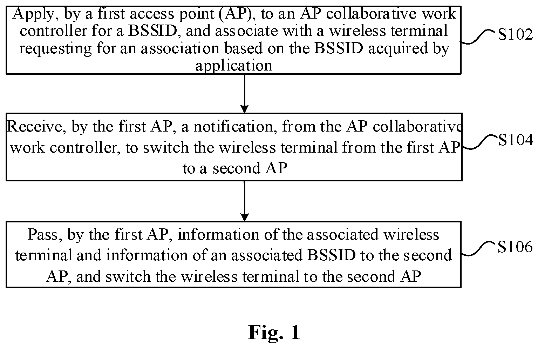

In an embodiment of the present disclosure, a switching method between access points (APs) is provided. Fig. 1 is a flowchart of switching a station between APs according to an embodiment of the present disclosure. As shown in Fig. 1, the following steps are included.

At step S102, a first access point (AP) applies to an AP collaborative work controller for a BSSID, and associates with a station requesting for an association based on the BSSID obtained by application.

At step S104, the first AP receives a notification, from the AP collaborative work controller, to switch the station from the first AP to a second AP.

At step S106, the first AP passes information of the associated station and information of an associated BSSID to the second AP, and switches the station to the second AP.

In the above embodiment, the second AP acquires, from the first AP, information of the associated station and information of the associated BSSID. Therefore, an association process and a key negotiation process with the station are omitted, so that roaming switching time is greatly shortened.

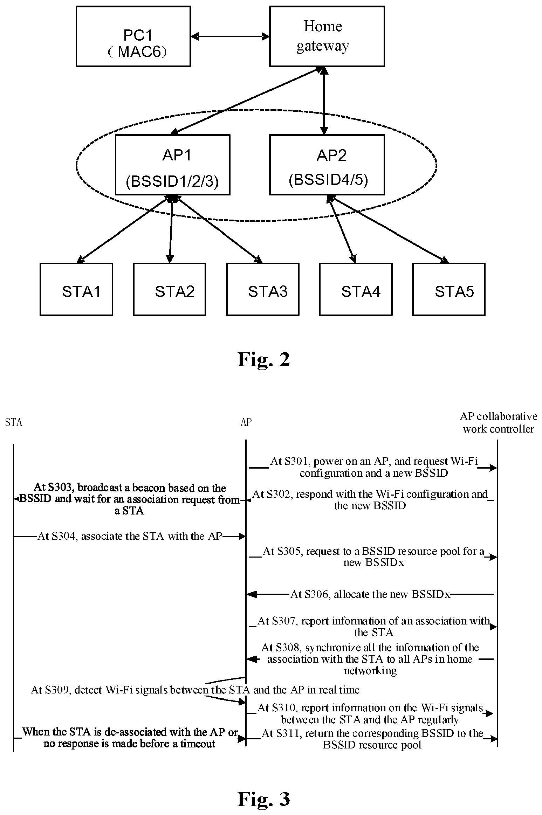

Fig. 2 is a schematic diagram of home networking of multiple APs according to an embodiment of the present disclosure. As shown in Fig. 2, the home networking in the present embodiment includes a PC, an AP collaborative work controller, APs and multiple STAs connected to the APs.

In Fig. 2, two APs are shown, i.e., AP1 and AP2. In the home networking of multiple APs, all APs work on the same channel. In this way, each AP may monitor information about Wi-Fi signals, including Wi-Fi signal strength, signal to noise ratio and so on, of all STAs, and the information may serve as a basis for later roaming switching.

Each AP may virtualize multiple APs to associate with corresponding STAs, and each virtualized AP may only associate with one STA. For example, as shown in Fig. 2, AP1 virtualizes BSSID1, BSSID2 and BSSID3 which respectively associate with STA1, STA2 and STA3. This ensures that switching BSSID does not affect other STAs connected to an AP when one STA connected to the AP is roamed. In the present embodiment, BSSID refers to a MAC address of a station, and generally one station only has one BSSID. Service set identifier (SSID) is a name of a wireless local network, and has at most 32 characters. Multiple APs may have the same SSID, but their BSSIDs are different. In the present embodiment, virtualizing multiple BSSIDs refers to that one physical station is provided with multiple BSSIDs which have the same SSID.

AP1 and AP2 are connected to the AP collaborative work controller. Either a home gateway or one of the APs may serve as the AP collaborative work controller. In the present embodiment, the home gateway serves as the AP collaborative work controller. The AP collaborative work controller is connected to PC1.

In the above home networking of the present embodiment, one AP may virtualize multiple APs. That is, each SSID of one AP may have multiple BSSIDs. Therefore, fast roaming in the home networking of multiple APs may be realized by switching BSSID between different APs, and without cooperation with the STA.

Fig. 3 is a flowchart of multiple APs collaboratively working according to an embodiment of the present disclosure. As shown in Fig. 3, the following steps are included.

At step S301, when an AP is powered on, the AP requests to an AP collaborative work controller for Wi-Fi work parameters, including an SSID name, an encryption manner and a key, a work channel and so on, and requests to a BSSID resource pool of the AP collaborative work controller for a new BSSID.

At step S302, the AP collaborative work controller responds to the AP with Wi-Fi configuration and the new BSSID.

At step S303, the AP broadcasts a beacon frame based on the BSSID and waits for an association request from a STA.

At step S304, the STA requests to the AP for an association and is associated with the AP.

At step S305, after one STA is associated with the AP successfully, the AP requests to the BSSID resource pool of the AP collaborative work controller for a new BSSIDx.

At step S306, the AP collaborative work controller allocates the new BSSIDx to the AP, and the AP broadcasts a beacon frame based on the new BSSIDx and waits for an association request from a new STA.

At step S307, the AP reports information of the association with the STA to the AP collaborative work controller, and the information includes a negotiated Wi-Fi key, a MAC address of the STA and so on.

At step S308, the AP collaborative work controller synchronizes the information to other APs which collaboratively work with the AP.

At step S309, all APs which collaboratively work monitor Wi-Fi signal quality between the STA and the AP in real time.

At step S310, each of all APs which collaboratively work reports all information about Wi-Fi signals between the STA in the home networking detected by the AP and the AP to the AP collaborative work controller, and the information will serve as a basis for determining STA roaming switching by the AP collaborative work controller.

At step S311, if the STA is de-associated with the AP or no response is made before a timeout, the AP returns the corresponding BSSID to the BSSID resource pool of the home gateway.

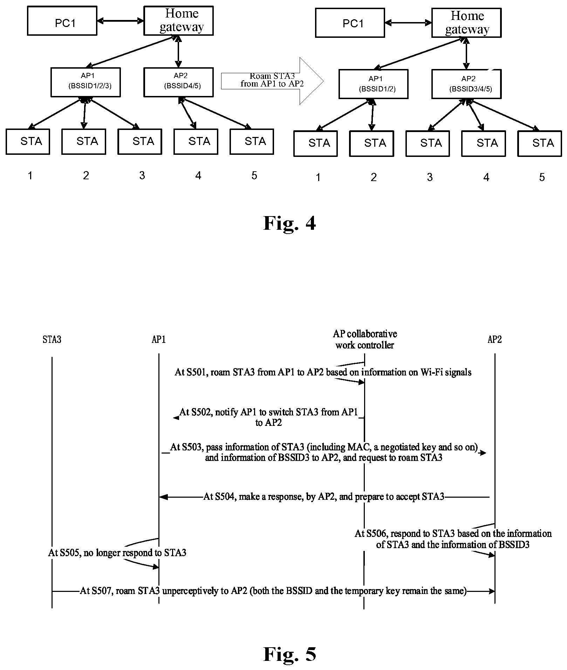

Fig. 4 is a schematic diagram of switching a STA between APs according to an embodiment of the present disclosure. As shown in Fig. 4, before performing switching between APs, STA1, STA2 and STA3 are respectively associated with AP1 via BSSID1, BSSID2 and BSSID3, and STA4 and STA5 are respectively associated with AP2 via BSSID4 and BSSID5.

STA3 is roamed from AP1 to AP2. After roaming switching of STA3 is performed, STA1 and STA2 are respectively associated with AP1 via BSSID1 and BSSID2, and STA3, STA4 and STA5 are respectively associated with AP2 via BSSID3, BSSID4 and BSSID5.

Fig. 5 is a flowchart of switching a STA between APs according to an embodiment of the present disclosure. As shown in Fig. 5, the following steps are included.

At step S501, during movement of STA3, an AP collaborative work controller compares information about Wi-Fi signals between STA3 and AP1 with information about Wi-Fi signals between STA3 and AP2, and determines that switching STA3 from AP1 to AP2 is required.

At step S502, the AP collaborative work controller notifies AP1 of switching STA3 from AP1 to AP2.

At step S503, AP1 passes information of STA3 (including MAC, a negotiated key and so on) and information of BSSID3 to AP2, and requests to roam STA3 to AP2.

At step S504, AP2 makes a response and prepares to accept STA3.

At step S505, AP1 no longer responds to STA3 after AP2 makes the response.

At step S506, AP2 responds to STA3 based on the acquired information of STA3 and the acquired information of BSSID3. At this time, AP2 has acquired a temporary key negotiated by STA3 and AP1, which is directly used for later encryption and decryption for packets between AP2 and STA3; and because of a corresponding relationship between STA3 and BSSID3, the temporary key remains the same.

At step S507, STA3 is roamed unperceptively to AP2, because both the BSSID and the temporary key remain the same.

In the roaming switching process of the present embodiment, since AP2 acquires information of STA3 and information of BSSID3 from AP1, an association process and a key negotiation process with STA3 are omitted, so that roaming switching time is greatly shortened.

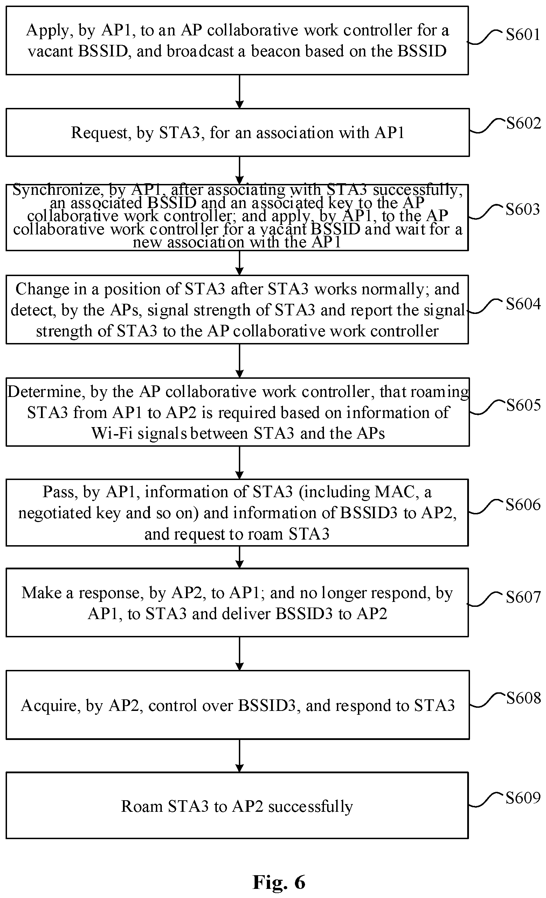

Fig. 6 is a flowchart of switching a STA between APs according to an embodiment of the present disclosure. As shown in Fig. 6, the following steps are included.

At step S601, AP1 applies to an AP collaborative work controller for a vacant BSSID, and broadcasts a beacon based on the BSSID.

At step S602, STA3 requests for an association with AP1.

At step S603, after associating with STA3 successfully, AP1 synchronizes information such as an associated BSSID and an associated key to the AP collaborative work controller; and AP1 applies to the AP collaborative work controller for a vacant BSSID and waits for a new association with the AP1.

At step S604, after STA3 works normally, a position of STA3 changes; and the APs detects signal strength of STA3 and report the signal strength of STA3 to the AP collaborative work controller.

At step S605, the AP collaborative work controller determines that roaming STA3 from AP1 to AP2 is required based on information about Wi-Fi signals between STA3 and the APs.

At step S606, AP1 passes information of STA3 (including MAC, a negotiated key and so on) and information of BSSID3 to AP2, and requests to roam STA3.

At step S607, AP2 makes a response to API; and AP1 no longer responds to STA3 and transfers BSSID3 to AP2.

At step S608, AP2 acquires control over BSSID3 and responds to STA3.

At step S609, STA3 is roamed to AP2 successfully.

Based on the above description of the embodiment, those skilled in the art can clearly know that the method according to the above embodiment may be implemented by means of software and a necessary general hardware platform, or may certainly be implemented by hardware, but the former is a preferred implementation manner in most cases. Based on such understanding, the technical solution of the present disclosure in essence or the part of the technical solution of the present disclosure that contributes to the existing technology may be embodied in the form of a software product. This computer software product is stored in a storage medium (for example a ROM/RAM, a magnetic disk, and an optical disk), and includes several instructions to cause one terminal device (which may be a mobile phone, a computer, a server or a network device) to execute the method according to respective embodiments.

In another embodiment, an AP and an AP collaborative work controller for implementing the above embodiments are further provided. The term of "module" as used below may implement a combination of software and/or hardware having a predetermined function. Although it is preferred that the device described in the following embodiment is implemented by means of software, it is possible and conceivable that the device is implemented by means of hardware or a combination of software and hardware.

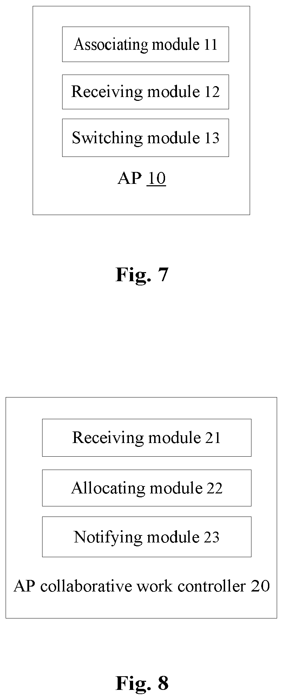

Fig. 7 is a block diagram of a structure of an AP according to an alternative embodiment of the present disclosure. As shown in Fig. 7, in the present embodiment, AP10 includes an associating module 11, a receiving module 12 and a switching module 13.

The associating module 11 is configured to apply to an AP collaborative work controller for a basic service set identifier (BSSID), and associate with a station requesting for an association based on the BSSID obtained by application.

The receiving module 12 is configured to receive a notification, from the AP collaborative work controller, to switch the station from AP itself to a second AP.

The switching module 13 is configured to pass information of an associated station and information of an associated BSSID to the second AP, and switch the station to the second AP.

It should be noted that the above respective modules may be implemented by means of software or hardware. Implementation by means of hardware includes, but is not limited to, the following manners: the above modules are all positioned in the same processor; or the above modules are respectively positioned in multiple processors.

In another embodiment, the AP includes a processor, a communication module and a memory. The processor may be a general CPU or other monolithic computers. The communication module may be a radio frequency circuit including an antenna, and is mainly used for sending and receiving signals. The memory stores a program for implementing respective functional modules in the above embodiment therein. In the present embodiment, the processor is used to execute software modules stored in the memory and collaborate with the communication module so as to implement functions of respective functional modules in the above embodiment.

Fig. 8 is a block diagram of a structure of an AP collaborative work controller according to an alternative embodiment of the present disclosure. As shown in Fig. 8, in the present embodiment, the AP collaborative work controller 20 includes a receiving module 21, an allocating module 22 and a notifying module 23.

The receiving module 21 is configured to receive an application for a basic service set identifier (BSSID) from a first access point (AP).

The allocating module 22 is configured to allocate one BSSID to the first AP based on the application, so that the first AP associates with a station requesting for an association based on the BSSID.

The notifying module 23 is configured to notify the first AP to switch the station from the first AP to a second AP.

It should be noted that the above respective modules may be implemented by means of software or hardware. Implementation by means of hardware includes, but is not limited to, the following manners: the above modules are all positioned in the same processor; or the above modules are respectively positioned in multiple processors.

In another embodiment, the AP collaborative work controller includes a processor, a communication module and a memory. The processor may be a general CPU or other monolithic computers. The communication module may be a radio frequency circuit including an antenna, and is mainly used for sending and receiving signals. The memory stores a program for implementing respective functional modules in the above embodiment therein. In the present embodiment, the processor is used to execute software modules stored in the memory and collaborate with the communication module so as to implement functions of respective functional modules in the above embodiment.

An embodiment of the present disclosure further provides a storage medium. In the present embodiment, the above storage medium may be configured to store program codes for executing steps of the above embodiments.

In the present embodiment, the above storage medium may include, but is not limited to, various mediums that can store program codes, such as a USB flash disk, a read-only memory (ROM), a random access memory (ROM), a mobile hard disk drive, a magnetic disk or an optical disk.

For specific examples of the present embodiment, reference can be made to the examples described in above embodiments and the alternative embodiments, and the examples will not be repeated here.

Obviously, those skilled in the art shall understand that respective modules and respective steps of the present disclosure may be implemented by a general computing device. They may be integrated on a single computing device or distributed on a network formed by multiple computer devices. Alternatively, they may be implemented by program codes executable by a computer device, so that they may be stored on a storage device and executed by the computing device. Besides, in some cases, steps illustrated or described may be executed in an order different from the order herein; or the steps illustrated or described may be implemented by making them into respective integrated circuit modules or making multiple modules or steps of them into a single integrated module.

The above embodiments are only preferred embodiments of the present disclosure, and are not intended for limiting the present disclosure. For those skilled in the art, various modifications and changes may be made to the present disclosure. Any modification, equivalent substitution and improvement within the spirit and the principle of the present disclosure shall fall into the protection scope of the present disclosure.

## Claims

1. A switching method between APs, comprising steps of:
applying, by a first access point (AP), to an AP collaborative work controller for a basic service set identifier (BSSID), and associating with a station requesting for an association based on the BSSID obtained by application, wherein each BSSID corresponds to one station;
receiving, by the first AP, a notification, from the AP collaborative work controller, to switch the station from the first AP to a second AP; and
passing, by the first AP, information of the associated station and information of an associated BSSID to the second AP, and switching the station to the second AP.

2. The switching method according to claim 1, wherein the step of applying, by a first AP, to an AP collaborative work controller for a basic service set identifier (BSSID) and associating with a station based on the BSSID obtained by application comprises steps of:
applying, by the first AP, to a BSSID resource pool of the AP collaborative work controller for a vacant BSSID, and broadcasting a beacon frame based on the BSSID obtained by application; and
responding, by the first AP, to an association request of the station, and associating with the station.

3. The switching method according to claim 1, wherein after the step of associating, by the first AP, with a station based on the BSSID, the switching method further comprises a step of:
synchronizing, by the first AP, information of the associated station and information of the associated BSSID to the AP collaborative work controller.

4. The switching method according to claim 1, wherein after the step of associating, by the first AP, with a station based on the BSSID, the switching method further comprises a step of:
returning, by the first AP, the BSSID obtained by application to the BSSID resource pool of the AP collaborative work controller when the first AP de-associates with the station or no response is made before a timeout.

5. The switching method according to claim 1, wherein before the step of receiving, by the first AP, a notification to switch the station from the first AP to a second AP, the switching method further comprises steps of:
reporting, by the first AP and the second AP respectively, detected signal quality of the station to the AP collaborative work controller; and
determining, by the AP collaborative work controller, whether to switch the station from the first AP to the second AP based on the reported signal quality of the station.

6. The switching method according to claim 1, wherein the step of switching, by the first AP, the station to the second AP comprises steps of:
requesting, by the first AP, to the second AP to switch the station to the second AP; and
terminating, by the first AP, the association to the station based on a switching response of the second AP, and transferring control over the associated BSSID to the second AP.

7. The switching method according to claim 1, wherein information of the station comprises a MAC address of the station and a negotiated key for associating the station with the first AP; and the information of the BSSID comprises a name of the BSSID.

8. The switching method according to claim 1, wherein there are multiple APs which all work on the same channel and the AP collaborative work controller is a home gateway or one of the multiple APs.

10. An access point (AP), comprising:
an associating module, which is configured to apply to an AP collaborative work controller for a basic service set identifier (BSSID), and associate with a station requesting for an association based on the BSSID obtained by application, wherein each BSSID corresponds to one station;
a receiving module, which is configured to receive a notification, from the AP collaborative work controller, to switch the station from the AP itself to a second AP; and
a switching module, which is configured to pass information of an associated station and information of an associated BSSID to the second AP, and switch the station to the second AP.

11. The AP according to claim 10, wherein the AP further comprises:
a synchronizing module, which is configured to synchronize the information of the associated station and information of the associated BSSID to the AP collaborative work controller.

12. The AP according to claim 10, wherein the AP further comprises:
a reporting module, which is configured to report detected signal quality of the station to the AP collaborative work controller.

13. The AP according to claim 10, wherein the switching module comprises:
a requesting unit, which is configured to request to the second AP to switch the station to the second AP; and
a switching unit, which is configured to terminate the association to the station based on a switching response of the second AP, and transfer control over the associated BSSID to the second AP.

14. The AP according to claim 10, wherein information of the station comprises a MAC address of the station and a negotiated key for associating the station with the first AP; and information of the BSSID comprises a name of the BSSID.

15. A switching method between access points (APs), comprising steps of:
receiving, by an AP collaborative work controller, an application for a basic service set identifier (BSSID) from a first access point (AP);
allocating, by the AP collaborative work controller, one BSSID, which is used to associate a station requesting for an association to the first AP, to the first AP based on the application, wherein each BSSID corresponds to one station; and
notifying, by the AP collaborative work controller, the first AP to switch the station from the first AP to a second AP.

16. The method according to claim 15, wherein after the step of allocating, by the AP collaborative work controller, one BSSID to the first AP based on the application, the method further comprises a step of:
synchronizing, by the AP collaborative work controller, information of the associated station and information of an associated BSSID with the first AP, and synchronizing the information of the station and the information of the BSSID to the second AP.

17. The method according to claim 15, wherein before the step of notifying, by the AP collaborative work controller, the first AP to switch the station from the first AP to a second AP, the method further comprises steps of:
receiving, by the AP collaborative work controller, detected signal quality of the station reported by the first AP and the second AP; and
determining whether to switch the station from the first AP to the second AP based on the reported signal quality of the station.

18. An AP collaborative work controller, comprising:
a receiving module, which is configured to receive an application for a basic service set identifier (BSSID) from a first access point (AP);
an allocating module, which is configured to allocate one BSSID to the first AP based on the application, so that the first AP associates with a station requesting for an association based on the BSSID, wherein each BSSID corresponds to one station; and
a notifying module, which is configured to notify the first AP to switch the station from the first AP to a second AP.

19. The AP collaborative work controller according to claim 18, further comprising:
a synchronizing module, which is configured to synchronize information of the associated station and information of an associated BSSID with the first AP, and synchronize the information of the station and the information of the BSSID to other APs.

20. The AP collaborative work controller according to claim 18, wherein:
the receiving module is further configured to receive detected signal quality of the station reported by the first AP and the second AP respectively; and
the AP collaborative work controller further comprises a determining module which is configured to determine whether to switch the station from the first AP to the second AP based on the reported signal quality of the station.

21. The AP collaborative work controller according to any of claims 18-20, wherein the AP collaborative work controller is a home gateway or one of multiple APs.
